# EUROPEAN PATENT SPECIFICATION

(11) **EP 2 659 680 B1**
(45) Date of publication and mention of the grant of the patent: **12.08.2020**
(21) Application number: 10861310.0
(22) Date of filing: 29.12.2010
(51) Int. Cl.: H04N 13/00, G02B 27/00, H04N 13/305, H04N 13/356

(54) **METHOD AND APPARATUS FOR PROVIDING MONO-VISION IN MULTI-VIEW SYSTEM**
VERFAHREN UND VORRICHTUNG ZUR BEREITSTELLUNG VON MONOVISION IN EINEM MEHRANSICHTSYSTEM
PROCÉDÉ ET APPAREIL POUR RÉALISER UNE MONOVISION DANS UN SYSTÈME MULTIVUE

(43) Date of publication of application: 06.11.2013
(73) Proprietor: InterDigital Madison Patent Holdings, 75017 Paris (FR)
(72) Inventor: QIN, Peng, Beijing 100012 (CN); SHANGGUAN, Sinan, Beijing 100083 (CN); DU, Lin, Beijing 100082 (CN)
(74) Representative: Rolland, Sophie
(86) International application number: PCT/CN2010/002193
(87) International publication number: WO 2012/088628

(56) References cited:
- EP-A2- 1 154 655
- CN-A- 101 006 733
- CN-A- 101 546 043
- JP-A- 9 160 144
- US-A1- 2002 011 969
- US-A1- 2002 036 648
- US-A1- 2010 090 940

## Description

### TECHNICAL FIELD

The present invention relates to multi-view, and more particularly, relates to a method and an apparatus for providing mono-vision in a multi-view system.

### BACKGROUND

Providing stereo-vision (or three dimensional, 3D) without glasses is very important for users/ viewers. So Multi-view technology is adopted for many 3D TV sets, enabling one or more person to watch a 3D movie without need of wearing glasses. A lenticular lens is an array of magnifying lenses, designed so that when viewed from slightly different angles, different images are magnified. A number of manufactures are developing auto-stereoscopic high definition 3D televisions, using lenticular lens systems to avoid the need for special glasses. This technology puts lenticular lens screen on the top of a LCD which can display an image that is comprised of two or more images of the same scene captured by two more cameras from different viewpoints. Since the image is placed in the focal plane of the lenticular lens, different views are refracted only at fixed angles. The lenticular lens of the 3D TV set refracts the left perspective view of a scene to a person's left eye and the right perspective view of the same scene to the right eye so that the person can have a stereoscopic vision.

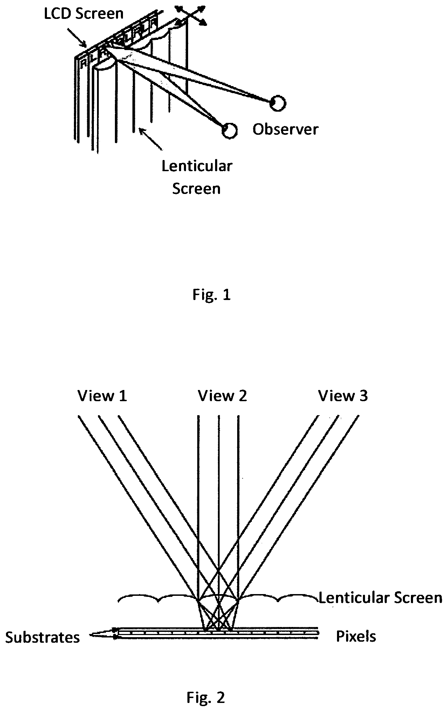

Fig. 1 shows a two-view lenticular array display according to the prior art. In the diagram, the L and R denote corresponding columns of left and right-eye images. The working principle is that two stereo half images are present simultaneously, with two columns of pixels (one for the left-eye image and one for the right-eye image) behind a lenticular screen (or prism mask). The lenticular screen directs left image and right image to corresponding eyes of the observer.

In a multi-view stereoscopic display, a lenticular screen is placed on the top of an LCD as in two-view display described above. But in this case the LCD is located at the focal plane of lenses as shown in Fig. 2, which depicts a multi-view lenticular array display according to the prior art. The LCD depicts an image comprised by several perspective views of the same scene. Because the image is placed in the focal plane of the lenticular array, different views are refracted only at fixed angles. So the left observer's eye will lie in a region where one perspective view is seen, while the other eye in a region where the adjacent perspective view is seen. And consequently, stereoscopic effect appears. In the example shown in Fig. 2, three columns of pixels contribute to three viewing zones. The number of viewing zones can be increased by adding more perspective views.

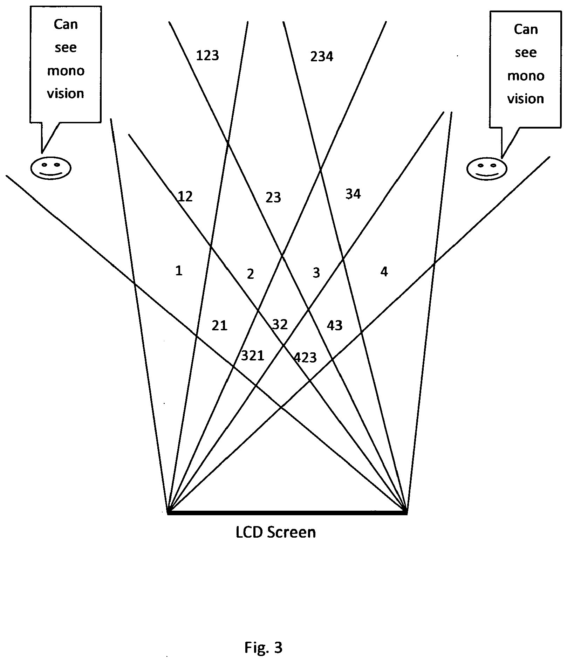

Fig. 3 shows a 4-view stereoscopic display according to the prior art. In this example, an image contains 4 perspective views. Herein, they are marked with 1, 2, 3, and 4. A diamond-shaped region can receive one or more views as indicated in the Fig. 3. For example, the diamond-shape region marked with 2 can receive view 2, and the region marked with 43 can receives view 3 and view 4. Only the regions receiving a single view are suitable for viewing, i.e. view 1, view 2, view 3 and view 4. While observer stays in these regions, one view is directed to his left eye and another view is directed to his right eye, and consequently stereoscopic effect appears. If the observer wants to see mono-vision, he has to stay in uncomfortable regions as indicated in the Fig. 3.

Thus, it's desired a method, which allows different viewers to use these kinds of 3D TV set at the same time. For example, one viewer can sit at comfortable position to see mono-vision while others can also sit at the comfortable position to see stereo-vision.

### SUMMARY

According to an aspect of present invention, it is provided a method for providing mono-vision in a multi-view system as defined in claim 1.

According to another aspect of present invention, it is provided an apparatus for providing mono-vision in a multi-view system as set out in claim 3.

According to the aspect of present invention, it allows a viewer to watch mono-vision in a multi-view system which originally provides stereo-vision.

It is to be understood that more aspects and advantages of the invention will be found in the following detailed description of the present invention.

### BRIEF DESCRIPTION OF THE DRAWINGS

The accompanying drawings, which are included to provide a further understanding of the, illustrate embodiments of the invention together with the description which serves to explain the principle of the invention. Therefore, the invention is not limited to the embodiments. In the drawings:
Fig. 1 is a diagram showing a two-view lenticular array display according to the prior art;
Fig. 2 is a diagram showing a multi-view lenticular array display according to the prior art;
Fig. 3 is a diagram showing a 4-view stereoscopic display according to the prior art;
Fig: 4 is a diagram showing an example of generating a multi-view video from 4 perspective views of the same scene according to an embodiment of present invention;
Fig. 5 is a diagram showing viewing zones when a multi-view video is shown on a multi-view display according to the embodiment of present invention;
Fig. 6 is a flow chart showing a method for changing the vision in a viewing zone from stereo-vision to mono-vision according to the embodiment of present invention;
Fig. 7 is a diagram showing the display copies content of view 2 to view 1 according to the embodiment of present invention;
Fig. 8 is a diagram showing the pixel rearrangement from views 1, 2, 3 and 4 after viewing zone 1 is instructed to display mono-vision according to the embodiment of present invention;
Fig. 9 is a diagram showing the display copies the content of view 1 to view 2 when the display is instructed to display mono-vision to the viewing zone 1 according to the embodiment of present invention;
Fig. 10 is a diagram showing a system for detecting the viewing zone where a viewer stays according to the embodiment of present invention;
Fig. 11 is a diagram showing how to detect the viewing zone according to the embodiment of present invention;
Fig. 12 is a block diagram showing an apparatus for providing mono-vision in a multi-view system according to the embodiment of present invention.

### DETAILED DESCRIPTION

An embodiment of the present invention will now be described in detail in conjunction with the drawings. In the following description, some detailed descriptions of known functions and configurations may be omitted for clarity and conciseness.

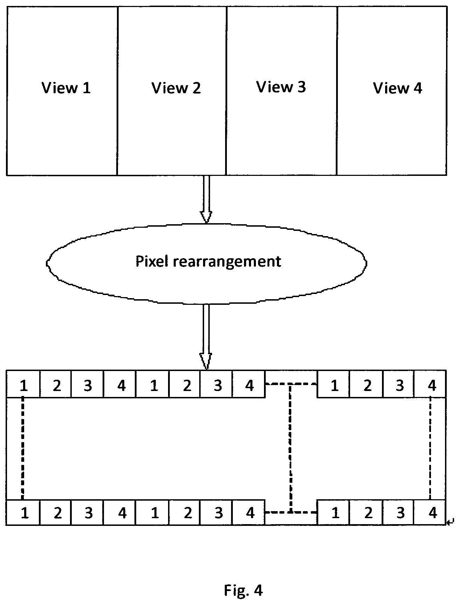

Fig. 4 is a diagram showing an example of generating a multi-view (4 view in this example) video from 4 perspective views of the same scene according to an embodiment of present invention. As shown in the Fig. 4, source videos of the 4 perspective views are converted to a multi-view video in a frame by frame manner. In each resultant frame of the multi-view video, pixel columns from 4 views are arranged alternately as shown in Fig. 4. In this example, four views each with resolution of 200*340 are used to generate a multi-view video with resolution of 800*340. As to the pixel rearrangement of 4 views to generate the multi-view video, the first pixel columns of 4 views are taken in turn to constitute the first 4 pixel columns of the multi-view video, and then to constitute 5-8 pixel columns with second pixel columns of 4 views. This process is continued until the last pixel columns of 4 views are taken to constitute the last 4 pixel columns of the multi-view video. According to a variant, each view has a resolution of 800*340. In order to generate the multi-view video, sampling approaches can be used. In addition, it shall note that a multi-view video can be generated from 5 or more views.

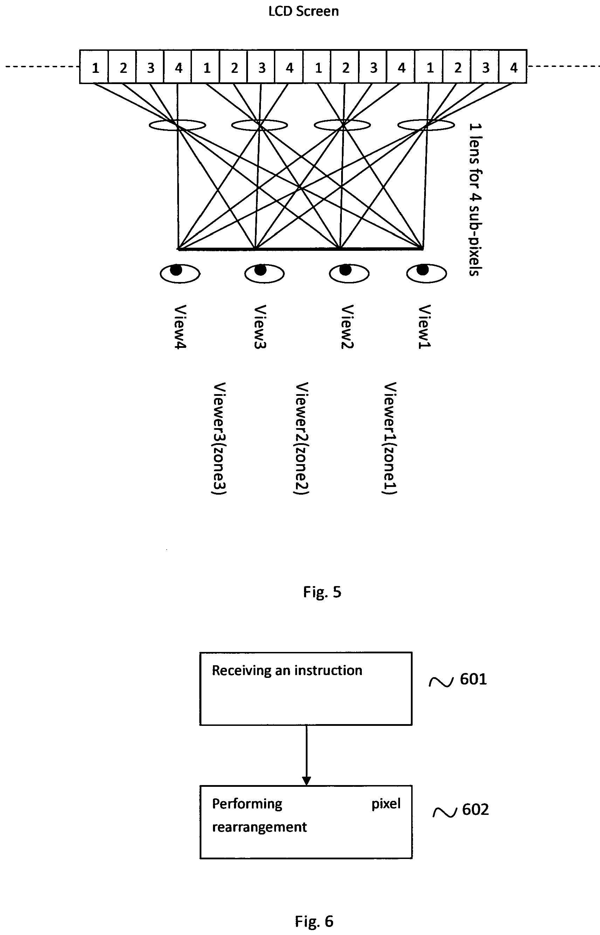

Fig. 5 is a diagram showing viewing zones when a multi-view video containing 4 views is shown on a multi-view display according to the present embodiment. In the diagram, 1 represents that the pixel column comes from view 1, and so do 2, 3 and 4. In this example, there are 3 viewers/ observers, i.e. viewer 1, viewer 2 and viewer 3. Each viewer can see two adjacent views, with each eye seeing one view so that he can have stereo-vision. For example, viewer 1 can see view 1 and view 2, and viewer 2 can see view 2 and view 3.

Fig. 6 is a flow chart depicting a method for changing the vision in a viewing zone from stereo-vision (or called 3D) to mono-vision (or called 2D) according to the embodiment of present invention. Let's assume that a viewer sits in viewing zone 1 as shown in the Fig. 5. So he can see both two adjacent views, i.e. view 1 and view 2, which can render the stereo-vision.

In the step 601, the display receives an instruction requesting changing the vision of the viewing zone, e.g. viewing zone 1 as shown in the Fig. 5, from the stereo-vision to the mono-vision. The instruction can be triggered by a press of button in a remote.

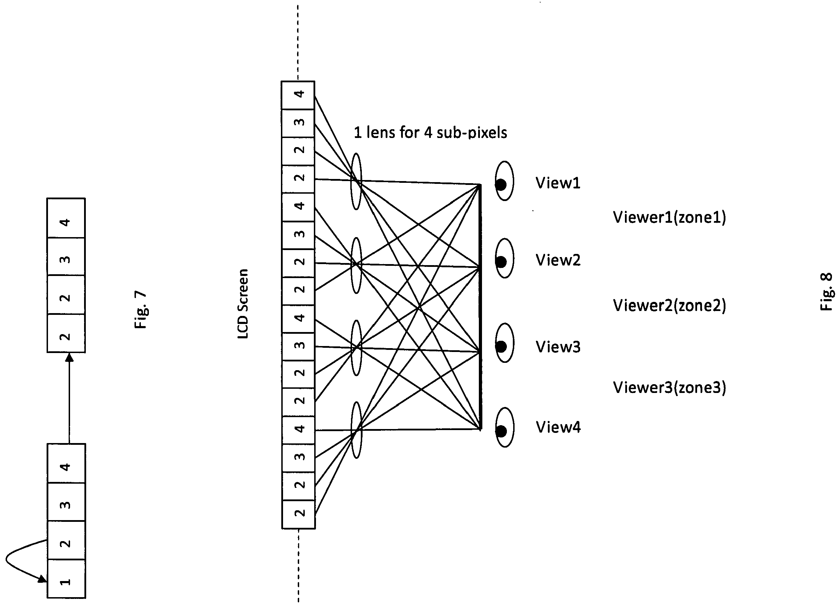

In the step 602, the display copies content of one view of the two adjacent views, which correspond to the viewing zone, to the other view. In this example, the view 1 and the view 2 correspond to the viewing zone 1. So the display can either copy content of view 1 to view 2 or copy content of view 2 to view 1. Fig. 7 is a diagram showing that the display copies content of view 2 to view 1 according to the present invention. As can be seen from the diagram, the copy of content of view 2 to view 1 can be implemented by copying pixel columns of view 2 to their adjacent pixel columns of view 1. Fig. 8 is a diagram showing the pixel rearrangement from views 1, 2, 3 and 4 after viewing zone 1 is instructed to display mono-vision according to the present embodiment.

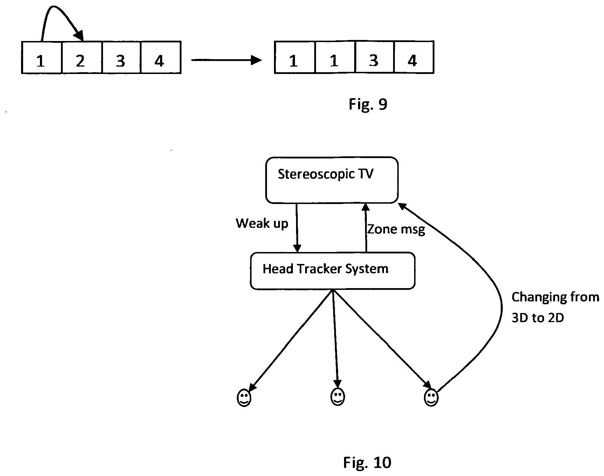

The method as shown in the Fig. 6 works well if a single viewer watches. But it may cause uncomfortable viewing experience to other viewers if multiple viewers watch. Fig. 9 shows the display copies the content of view 1 to view 2 when the display is instructed to display mono-vision to the viewing zone 1. In connection with Fig. 5, it can be seen that the viewing zone 1 only corresponds to view 1, i.e. both eyes of a viewer sitting in the viewing zone 1 see content of view 1. But it causes ghosting to a viewer sitting in the viewing zone 2 because the viewer sees view 1 and view 3, which are not adjacent views. When users see two views that are not adjacent, the visual effect will have different depth information, deformation and other issues. Thus, in order not to cause ghosting to other viewers when a viewer wants to change the viewing zone he stays to mono-vision, the pixel rearranging rule contains 1) the two views arranged on the display corresponding to the viewing zone of mono-vision shall be the same in terms of content; and 2) the two views arranged on the display corresponding to any other viewing zone of stereo-vision shall be two adjacent views among all views of the same scene. An example of pseudo-code satisfying the pixel rearrangement rule shows below. But it shall note that this pseudo-code is only an example, and shall not be used to limit the invention.

Assuming there are total of N-views, a viewer sits in the viewing zone M, and the viewing zone M corresponds to view m and view m+1. The pseudo-code for changing the vision of the viewing zone M from stereo-vision to mono-vision without affecting other viewers' viewing experience is as follow:

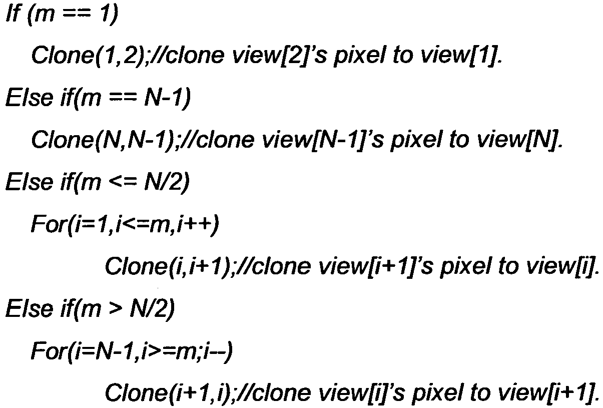

According to the present embodiment, it is the display that performs the pixel rearrangement for changing the vision of a viewing zone from stereo-vision to mono-vision. According to a variant, the processing module for performing pixel rearrangement can locate in an independent device other than the display.

According to a variant, the viewing zone of mono-vision can change as the viewer moves in front of the stereoscopic display. For example, the technologies of camera based pattern recognition or IR (infrared) based time of flight (TOF) can be used to detect in which viewing zone the viewer is. And correspondingly, the current viewing zone where the viewer stays is changed from stereo-vision to mono-vision, and the previous viewing zone where the viewer stayed is changed from mono-vision to stereo-vision. Regarding the IR based TOF, the basic principle involves sending out a signal and measuring a property of the returned signal from a target. The distance is obtained via multiplication of the time of flight and the velocity of the signal in the application medium. Another improvement for the TOF technique is to measure the encoded infrared waves phase shift for calculating the distance between object and light source.

Fig. 10 is a diagram showing a system for detecting the viewing zone where a viewer stays according to the present embodiment.

When a viewer turns on the stereoscopic TV (the video show as stereo at default mode), head tracker system stays asleep for power saving. After the viewer pushes a button in the remote instructing to change to mono-vision, the TV wakes up the head tracker system to detect in/to which viewing zone the viewer stays/ moves. After the TV receives the viewing zone information, it will perform pixel rearrangement correspondingly by using methods as described above. In addition, if the viewer does not move then the head tracker system will turn to sleep mode for power saving.

For the head tracking system, we can use some existing technologies, such as depth sensor and knowledge-based recognition, to detect the position information of the viewer relative to the stereoscopic TV. For example, Microsoft uses PRIMESENSE depth sensor (it uses light coding technology) in the Kinect system. The depth sensor can generate good depth image, which can provide geometry information directly, so it is easy to substrate the background. But the system will not sense with the texture of the face and orientation of the head. Knowledge-based recognition technology is robustness and recovery quickly, because it depends on finding a good match in the training set, rather than performing a local search in parameter space. Use these existing technologies, the head tracking system can get the position of the head. The method for detecting the viewing zone where the viewer stays is introduced below.

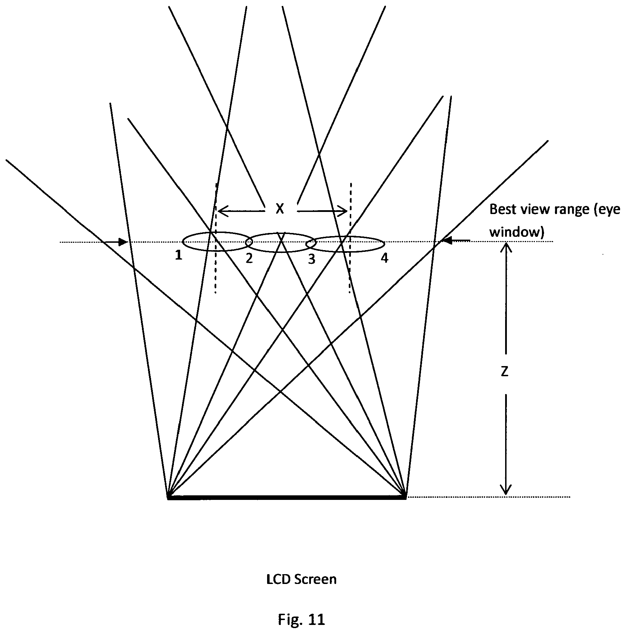

Fig. 11 is a diagram showing how to detect the viewing zone where the viewer stays by using head tracking system according to the present embodiment. Supposing the optimal distance is Z (lenticular lens multi-view system have the best view range, in this range, user can see the perfect stereoscopic video, the optimal distance is the distance between the best view range and TV set); the viewer instructing to see mono-vision stays in Zone_{M} and he will move X in horizontal orientation to Zone_{M+N}. The below pseudo-code can be used to determine in which viewing zone the viewer stays.

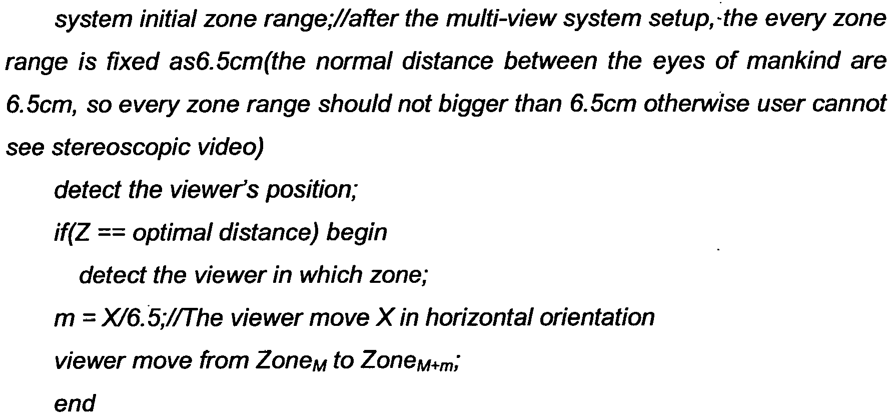

Here, because the system knows that it was Zone_{M} where the viewer stayed and the viewer has moved (m=X/6.5) zone, the system can calculate the current viewing zone where the viewer stays, i.e. Zone_{M+m}. And correspondingly, the display performs pixel rearrangement based on current viewing zone.

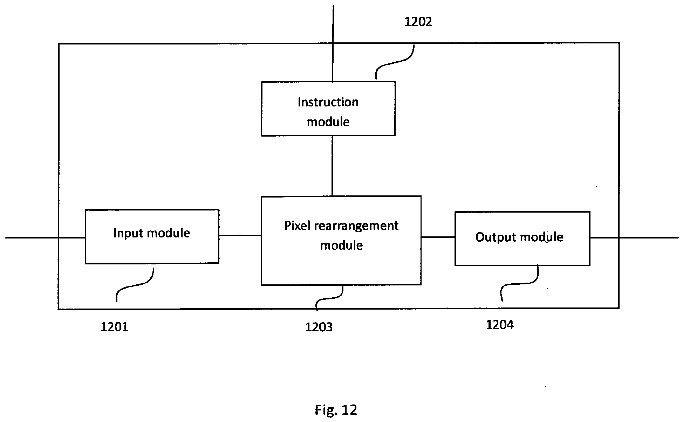

Fig. 12 is a block diagram showing an apparatus for providing mono-vision in a multi-view system according to the present embodiment. It is implemented by performing pixel rearrangement for one or more viewing zones according to received instructions. For example, when the apparatus receives an instruction requesting mono-vision for viewing zone 1 as shown in the Fig. 5, the apparatus will perform pixel rearrangement to make two views that are refracted to the viewing zone 1 show the same view, i.e. they can both show view 1, or both show view 2. It shall note that the apparatus can be integrated into other device, e.g. stereoscopic TV. Specifically, the apparatus comprises an input module 1201, an instruction module 1202, a pixel rearrangement module 1203 and an output module 1204. The input module 1201 is used to receive a plurality of views corresponding to the same scene. It shall note that the plurality of views can be in the form of independent data stream, or in the form of an image composed of the plurality of views in the same way as Fig. 4 shows. The instruction module 1202 is used to receive an instruction for requesting to provide mono-vision to a viewing zone and pass the instruction to the pixel rearrangement module 1203. The pixel rearrangement module 1203 is used to, based on the received plurality of views and received instruction, perform pixel rearrangement to generate an image from the plurality of views in such a way that two views being refracted to the viewing zone for mono-vision are of the same view among the plurality of views (i.e. the views contain the same content) and two views being refracted to any other viewing zones for stereo-vision are two adjacent views among the plurality of views. The output module 1204 is used to output the generated image. According to a variant, the apparatus comprises a detecting module (not shown in the diagram) for detecting in which viewing zone the viewer wanting mono-vision stays, and sending to the instruction module 1202 an instruction requesting current viewing zone to show mono-vision and previous viewing zone to show stereo-vision.

## Claims

1. A method for providing mono-vision in a multi-view system comprising N views of the same scene and N-1 viewing zones, wherein N is greater or equal to four and wherein each viewing zone is provided with two views adjacent in said N views so as to provide stereo-vision, the method comprising the steps of:
receiving an instruction requesting to provide mono-vision for a current viewing zone, said current viewing zone corresponding to a first view for a position m in said N views and a second view at a position m+1 in said N views; and
rearranging the N views by:
if said first view belongs to the first half of said N views, for each view at position n from position 1 to position m in said N views, copying the view at position n+1 into the view at position n;
otherwise, for each view at position n from position N-1 to position m, copying the view at position n into the view at position n+1.

2. The method of the claim 1, further comprising
detecting said current viewing zone where a viewer selecting mono-vision is, as the viewer moves.

3. An apparatus for providing mono-vision in a multi-view system comprising N views of the same scene and N-1 viewing zones, wherein N is greater or equal to four and wherein each viewing zone is provided with two views adjacent in said N views so as to provide stereo-vision, the apparatus comprising
an input module (1201) used to receive the list of N views;
an instruction module (1202) used to receive an instruction for requesting to provide mono-vision for a current viewing zone corresponding to a first view at a position m in said list and a second view at a position m+1 in said list and pass the instruction to a view rearrangement module (1203); and
upon receiving said instruction, perform rearrangement for the list of N views by:
if said first view belongs to the first half of said list of views, for each view at position n from position 1 to position m in said list, copying the view at position n+1 into the view at position n;
otherwise, for each view at position n from position N-1 to position m, copying the view at position n into the view at position n+1.

4. The apparatus of the claim 3, further comprising a detecting module used to detect said current viewing zone where a viewer selecting mono-vision is, as the viewer moves.

## Patentansprüche

1. Verfahren zum Bereitstellen einer Monovision in einem Multi-View-System, das N Ansichten derselben Szene und N-1 Betrachtungszonen umfasst, wobei N größer oder gleich vier ist und wobei jede Betrachtungszone mit zwei Ansichten versehen ist, die in den N Ansichten angrenzen, um eine Stereovision bereitzustellen, wobei das Verfahren die folgenden Schritte umfasst:
Empfangen einer Anweisung, die das Bereitstellen einer Monovision für eine gegenwärtige Betrachtungszone anfordert, wobei die gegenwärtige Betrachtungszone einer ersten Ansicht für eine Position m in den N Ansichten und einer zweiten Ansicht an einer Position m+1 in den N Ansichten entspricht; und
Umordnen der N Ansichten durch:
Kopieren der Ansicht an der Position n+1 in die Ansicht an der Position n für jede Ansicht an der Position n von der Position 1 bis zu der Position m in den N Ansichten, falls die erste Ansicht zu der ersten Hälfte der N Ansichten gehört;
andernfalls Kopieren der Ansicht an der Position n in die Ansicht an der Position n+1 für jede Ansicht an der Position n von der Position N-1 bis zu der Position m.

2. Verfahren nach Anspruch 1, das ferner umfasst:
Detektieren der gegenwärtigen Betrachtungszone, bei der ein Betrachter die Monovision auswählt, während sich der Betrachter bewegt.

3. Vorrichtung zum Bereitstellen einer Monovision in einem Multi-View-System, das N Ansichten derselben Szene und N-1 Betrachtungszonen umfasst, wobei N größer oder gleich vier ist und wobei jede Betrachtungszone mit zwei Ansichten versehen ist, die in den N Ansichten angrenzen, um eine Stereovision bereitzustellen, wobei die Vorrichtung umfasst:
ein Eingangsmodul (1201), das zum Empfangen der Liste von N Ansichten verwendet wird;
ein Anweisungsmodul (1202), das zum Empfangen einer Anweisung zum Anfordern des Bereitstellens einer Monovision für eine gegenwärtige Betrachtungszone, die einer ersten Ansicht an einer Position m in der Liste und einer zweiten Ansicht an einer Position m+1 in der Liste entspricht, und zum Übergeben der Anweisung an ein Ansichtsumordnungsmodul (1203) verwendet wird;
und
Ausführen der Umordnung für die Liste von N Ansichten bei Empfang der Anweisung durch:
Kopieren der Ansicht an der Position n+1 in die Ansicht an der Position n für jede Ansicht an der Position n von der Position 1 bis zu der Position m in der Liste, falls die erste Ansicht zu der ersten Hälfte der Liste von Ansichten gehört;
andernfalls Kopieren der Ansicht an der Position n in die Ansicht an der Position n+1 für jede Ansicht an der Position n von der Position N-1 bis zu der Position m.

4. Vorrichtung nach Anspruch 3, die ferner ein Detektionsmodul umfasst, das zum Detektieren der gegenwärtigen Betrachtungszone verwendet wird, wobei ein Betrachter die Monovision auswählt, während sich der Betrachter bewegt.

## Revendications

1. Procédé pour fournir une monovision dans un système multivue comprenant N vues de la même scène et N-1 zones de visualisation, où N est supérieur ou égal à quatre et où chaque zone de visualisation présente deux vues adjacentes dans lesdites N vues de manière à fournir une stéréovision, le procédé comprenant les étapes suivantes :
la réception d'une instruction demandant la fourniture d'une monovision pour une zone de visualisation courante, ladite zone de visualisation courante correspondant à une première vue pour une position m dans lesdites N vues et
une deuxième vue à une position m+1 dans lesdites N vues ; et
la réorganisation des N vues par :
si ladite première vue appartient à la première moitié desdites N vues, pour chaque vue à la position n entre la position 1 et la position m dans lesdites N vues, la copie de la vue à la position n+1 dans la vue à la position n ;
sinon, pour chaque vue à la position n entre la position N-1 et la position m,
la copie de la vue à la position n dans la vue à la position n+1.

2. Procédé selon la revendication 1, comprenant en outre
la détection de ladite zone de visualisation courante dans laquelle se trouve un spectateur sélectionnant la monovision, lorsque le spectateur se déplace.

3. Appareil pour fournir une monovision dans un système multivue comprenant N vues de la même scène et N-1 zones de visualisation, où N est supérieur ou égal à quatre et où chaque zone de visualisation présente deux vues adjacentes dans lesdites N vues de manière à fournir une stéréovision, l'appareil comprenant :
un module d'entrée (1201) utilisé pour recevoir la liste de N vues ;
un module d'instruction (1202) utilisé pour recevoir une instruction demandant la fourniture d'une monovision pour une zone de visualisation courante correspondant à une première vue à une position m dans ladite liste et une deuxième vue à une position m+1 dans ladite liste et transmettre l'instruction à un module de réorganisation des vues (1203) ; et
à la réception de ladite instruction, la réorganisation de la liste de N vues par :
si ladite première vue appartient à la première moitié de ladite liste de vues,
pour chaque vue à la position n entre la position 1 et la position m dans ladite liste, la copie de la vue à la position n+1 dans la vue à la position n ;
sinon, pour chaque vue à la position n entre la position N-1 et la position m,
la copie de la vue à la position n dans la vue à la position n+1.

4. Appareil selon la revendication 3, comprenant en outre un module de détection utilisé pour détecter ladite zone de visualisation courante dans laquelle se trouve un spectateur sélectionnant la monovision, lorsque le spectateur se déplace.
